# EUROPÄISCHE PATENTSCHRIFT

(11) **EP 0 368 263 B1**
(45) Veröffentlichungstag und Bekanntmachung des Hinweises auf die Patenterteilung: **29.09.1993**
(21) Anmeldenummer: 89120643.5
(22) Anmeldetag: 08.11.1989
(51) Int. Cl.: G01K 11/06

(54) **Schmelzindikator zur Überwachung von temperaturempfindlichen Produkten**
Melting indicator to watch over temperature-sensitive products
Indicateur fondant pour surveiller des produits sensibles à la température

(30) Priorität: 11.11.1988 DE 3838368
(43) Veröffentlichungstag der Anmeldung: 16.05.1990
(73) Patentinhaber: Holzer, Walter, Senator h.c. Dr.h.c.Ing., D-88709 Meersburg (DE)
(72) Erfinder: Holzer, Walter, Senator h.c. Dr.h.c.Ing., D-88709 Meersburg (DE)
(74) Vertreter: Riebling, Peter, Dr.-Ing.

(56) Entgegenhaltungen:
- EP-A- 0 094 154
- EP-A- 0 250 217
- US-A- 3 521 489

## Beschreibung

Temperaturempfindliche Produkte erleiden meist schon bei Überschreitung einer kritischen Temperatur nach kurzer Zeit eine Qualitätsminderung, die sich von einem Geschmacksverlust bis zur vollkommenen Ungeniessbarkeit erstreckt.

In letzter Zeit werden in zunehmendem Masse Schmelzindikatoren zur Überwachung von unzulässigen Temperaturüberschreitungen eingesetzt. Diese Indikatoren verwenden Flüssigkeiten, deren Schmelzpunkt der zu überwachenden kritischen Temperatur entspricht.

Um den Schmelzvorgang feststellen zu können, ist es naturgemäss erforderlich die Indikatoren zunächst einzufrieren. Andererseits soll vermieden werden, dass beim Absinken der Temperatur unter den kritischen Wert die Indikatorflüssigkeit wieder einfriert und damit die Überschhreitung nicht mehr erkennbar ist, d.h. der Schmelzvorgang muss irreversibel erkennbar sein.

Die bisherigen Schmelzindikatoren arbeiten daher meist nach dem Prinzip, dass die Flüssigkeit in einer bestimmten Form eingefroren wird und beim Auftauen diese Form verloren geht, sodass selbst bei erneutem Wiedereinfrieren das ursprüngliche Aussehen nicht eintritt. Siehe z.B. EP-A-0 250 217 und EP-A-0 094 154.

Andere Indikatoren verwenden irreversible Farbumschläge zur Erkennung der Temperaturüberschreitung, aber auch diese benotigen Massnahmen um die Anzeige irreversibel zu machen.

Erfindungsgemäss wird vorgeschlagen, als Indikatorflüssigkeit Stoffe zu verwenden, deren Schmelzpunkt der zu überwachenden kritischen Temperatur entspricht, die aber erst bei einer Temperatur frieren, die unter der niedrigsten auftretenden Temperatur des Kühlgerätes in dem sie eingesetzt werden liegt.

Durch entsprechende Auswahl und Mischung von Flüssigkeiten ist es möglich, die Differenz zwischen Schmelzpunkt und Gefrierpunkt soweit auseinander zu legen, dass nach einem erfolgten Auftauen, selbst bei der tiefsten eingestellten Temperatur des Kühlgerätes, ein Wiedereinfrieren nicht stattfindet.

Um den Schmelzvorgang besser erkennbar zu machen, wird erfindungsgemäss empfohlen, die Wandung des Behälters zumindest teilweise durch Druckeinwirkung von aussen elastisch zu verformen, um die Flüssigkeit in einen bestimmten Teilbereich des Behälters zu bringen. Nach dem Auftauen der Indikatorflüssigkeit wird sich diese dann nach anderen Bedingungen verteilen.

Dazu ist naturgemäss erforderlich, dass die Wandungen auch unter dem inneren Überdruck elastisch nachgeben können, sodass durch ein Eindrücken von aussen bei der Verlagerung der Flüssigkeit auch eine entsprechende Volumensausdehnung des Behälters möglich ist.

Die Erkennbarkeit des Schmelzvorganges wird auch dadurch erleichtert, dass im Behälter Kapillarzonen geringen Querschnitts vorhanden sind, in welche die Indikatorflüssigkeit durch Kapillarwirkung einströmt. Dies kann z.B. durch eine Formgebung ähnlich einer flachen Linse geschehen, welche die Kapillarzonen am Rande besitzt.

Die Ausweichmöglichkeit für die bei einem Druck von aussen verursachte Volumensverkleinerung wird in diesem Fall in einfacher Weise durch nach innen gewölbte elastische Zonen im mittleren Bereich der Linse erreicht.

Die Ausbildung eines Indikators für mehrere zu überwachende Temperaturen kann in einfacher Weise dadurch gelöst werden, dass mehrere solche linsenförmige Behälter auf einem Indikator angeordnet sind, wobei die einzelnen Indikatorflüssigkeiten verschieden gefärbt sind.

Konstruktiv ist ein derartiger linsenförmiger Behälter in einfacher Weise als Blister auszubilden. Was auch die Möglichkeit gibt, einen solchen Indikator als Teil einer Verpackung zu gestalten.

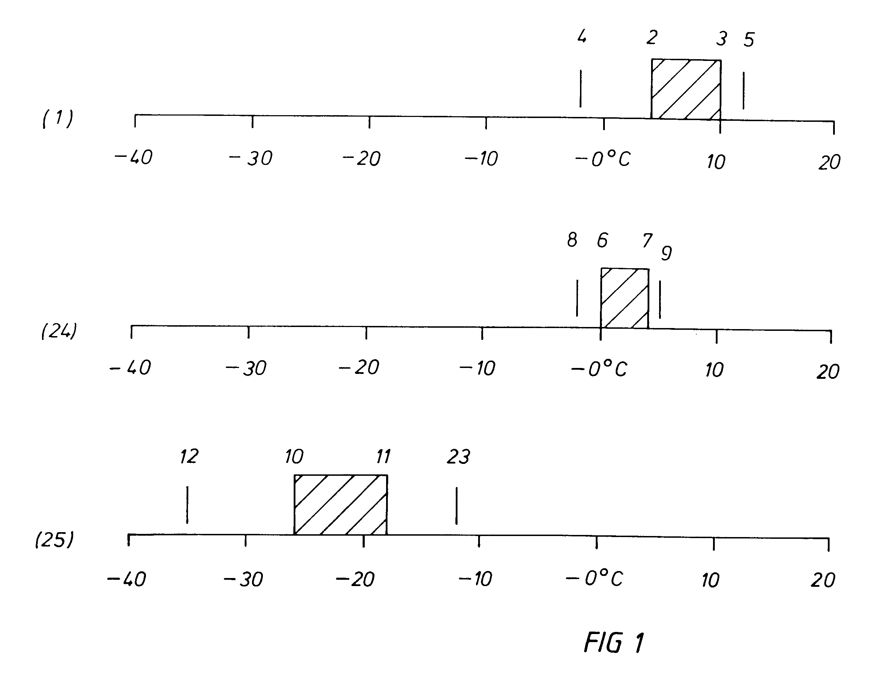

Figur 1 zeigt schematisch die Lage von den Schmelzpunkten und Gefrierpunkten in drei verschiedenen Kühlgeräten.

Der Kühlbereich eines normalen Kühlschrankes liegt etwa zwischen 4° C und 10° C. Auf dem Diagramm (1) ist dieser Betriebsbereich dargestellt, wobei mit (2) die unterste im Kühlschrank auftretende Temperatur und mit (3) die oberste Regeltemperatur des Kühlschrankes markiert ist. Erfindungsgemäss wird eine Indikatorflüssigkeit verwendet, die bei einer Temperatur von beispielsweise -2° C friert. Diese Temperatur ist mit (4) bezeichnet. Der Schmelzindikator hat die Aufgabe, das Überschreiten der Temperatur (3) anzuzeigen. Man wird daher den Schmelzpunkt der Indikatorflüssigkeit entweder entsprechend der Temperatur (3) wählen oder etwas höher, entsprechend dem Punkt (5) vorsehen, um ein vorzeitiges Ansprechen im Bereich (2) bis (3) zu vermeiden.

Das Diagramm (24) zeigt eine entsprechende Darstellung für den sogenannten "Superkühlbereich" von 0° C bis 4° C Die niedrigste Temperatur dieses Kühlbereiches liegt bei 0° C und ist mit (6), die obere Temperatur dieses Bereiches liegt etwa bei +4° C und ist mit (7) bezeichnet. Dementsprechend würde erfindungsgemäss eine Indikatorflüssigkeit verwendet, deren Gefrierpunkt unter 0° C z.B. bei (8) liegt, entsprechend -4° C. Die Schmelztemperatur würde zweckmässigerweise wieder oberhalb +4° C gewählt, z.B. bei +5° C, bezeichnet mit (9).

Das Diagramm (25) zeigt als Beispiel einen "Tiefgefrierbereich" bei dem die niedrigste Temperatur beispielsweise bei -26° C, bezeichnet mit (10), liegt. Die oberste Temperatur eines solchen Gerätes liegt üblicherweise bei -18° C, bezeichnet mit (11). Für einen Schmelzindikator der in einem solchen Bereich einsatzfähig sein soll, wird man den Gefrierpunkt beispielsweise bei (12) wählen, entsprechend -35° C. Der Schmelzpunkt (23) entspricht bei -12° C einer kritischen Temperaturgrenze bei der das Wachstum von Bakterien bei Lebensmitteln schlagartig ansteigt.

Die genannten Beispiele sind nur als solche zu verstehen, da je nach Mischung der Indikatorflüssigkeit die Gefrierpunkte (4), (8) und (12) nur mit einer ausreichenden Toleranz unter den jeweils tiefsten auftretenden Temperaturen des Kühlgerätes, entsprechend den Punkten (2), (6) und (10) liegen müssen. Die Gefrierpunkte (4), (8) bzw. (12) können beliebig tief liegen, aber man wird sie zweckmässigerweise nicht sehr weit unter die Punkte (2), (6) bzw. (10) legen, um beim Einfrieren der Indikatorlösungen einen nicht zu grossen Kühlaufwand betreiben zu müssen.

Die erfindungsgemässe Mischung einer Indikatorflüssigkeit, deren Gefrierpunkt unter der niedrigsten auftretenden Temperatur des Kühlgerätes liegt. hat den Vorteil. dass in dem betreffenden Kühlgerät nach erfolgtem Schmelzen der Indikatorflüssigkeit ein erneutes Einfrieren der Indikatorflüssigkeit nicht auftreten kann. Bei einem Ausfall des Kühlgerätes wird dann zwar die Indikatorflüssigkeit schmelzen, aber selbst wenn der Kühlschrank anschliessend wieder seine ordnungsgemässe Funktion aufnimmt, bleibt die Indikatorflüssigkeit im flüssigen Zustand.

Die erfindungsgemässen Schmelzindikatoren müssen selbstverständlich vor Anbringung auf den zu überwachenden Produkten, in einem anderen Kühlgerät gefroren werden, und sie werden sodann an den Produkten in gefrorenem Zustand angebracht. Dabei kann es erforderlich sein, dass man das Produkt bewegen muss um zu erkennen, ob die Indikatorflüssigkeit gefroren oder flüssig ist.

Eine weitere Ausgestaltung der Erfindung besteht darin, dass man den geschmolzenen Zustand der Indikatorflüssigkeit auch ohne Bewegung des Indikators erkennbar macht.

Die Lösung dieser Aufgabe besteht darin, dass man die Flüssigkeit in einen bestimmten Bereich des Behälters bringt, in dem durch Druckeinwirkung von aussen die Wandung des Behälters elastisch verformt wird, sodass die Flüssigkeit an eine andere Stelle gebracht wird. Dazu kann es notwendig sein, die Wandung des Behälters so auszubilden. dass sie auch elastisch einem inneren Druck nachgeben kann.

Figur 2 zeigt ein Ausführungsbeispiel eines solchen Indikators, mit einem Verdrängungsstempel (13).

Figur 3 zeigt den Indikator nach Figur 2 in aufgetautem Zustand.

Figur 4 zeigt den Stempel und den Indikator in Gefrierstellung.

Figur 5 zeigt den Indikator nach Figur 3 in gefrorenem Zustand.

Figur 6 zeigt den Indikator nach den Figuren 3 und 5 im Einbauzustand in den Deckel des Behälters (20).

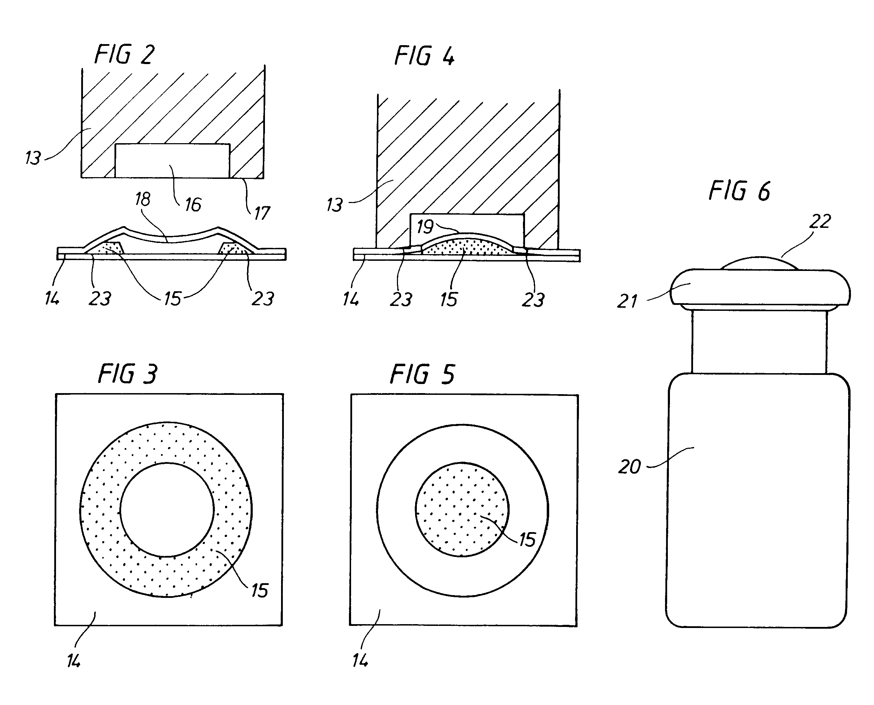

Im Ausführungsbeispiel nach den Figuren 2 bis 5 wird ein Stempel (13) auf einen Indikator (14) aufgesetzt. Der Stempel (13) weist hierbei eine mittlere, zentrale Ausnehmung (16) auf, die von einem Randbereich (17) umgeben ist.

Der Indikator (14) besteht aus einer Basisplatte, z.B. aus Aluminium welche unter Bildung eines Hohlraumes von einer oberen, elastisch verformbaren Kunststoff-Folie abgedeckt ist. Es wird hierdurch ein Hohlraum ausgebildet, in dem eine Flüssigkeit (15) eingelagert ist. Radial auswärts im Hohlraum sind dabei Kapillarzonen (23) ausgebildet, in welche sich die Flüssigkeit (15) in aufgetautem Zustand aufgrund der Kapillarwirkung einlagert.

In Draufsicht bildet dann der Indikator (14) gemäss Figur 3 die Form eines Auges, in dessen radial äusserer Ringzone die Flüssigkeit (15) angelagert ist.

Um den aufgetauten Indikator nach Figur 2 und 3 in seine Gefrierstellung und damit seine Überwachungsstellung zu bringen, wird der Stempel (13) auf den Indikator (14) gemäss Figur 4 aufgesetzt. Hierbei wird die vorher in den radial aussen liegenden Kapillarzonen (23) angelagerte, aufgetaute Flüssigkeit (15) in Richtung zur Mitte des Hohlraumes des Indikators (14) hingedrängt. Dies erfolgt dadurch, das der Randbereich (17) des Stempels (13) mit seinem inneren Durchmesser kleiner ist als der Durchmesser der Kapillarzonen, sodass die Flüssigkeit (15) aus diesen Kapillarzonen in Richtung zur Mitte hin verdrängt wird, wie dies in Figur 5 dargestellt ist.

Die obere, elastisch verformbare Wand des Indikators bildet hierbei jetzt eine konvexe Deckfläche (19). In dieser Stellung wird der Indikator eingefroren, sodass die Flüssigkeit (15) in der Mitte des Indikators verbleibt und der Indikator in seiner Gefrier- oder Überwachungsstellung ein Aussehen nach Figur 4 einnimmt.

Wichtig ist, dass die obere Abdeckung des Indikators elastisch verformbar und der dadurch gebildete Hohlraum nur zu einem Teil mit der Flüssigkeit gefüllt ist, sodass sich im aufgetauten Zustand die Deckfläche (18) an das jeweilige Volumen anpassen kann.

Die Figur 6 zeigt den Einbau eines Indikators (22) in den Deckel (21) eines Behälters (20). Die Anordnung ist fälschungssicher. Wird nämlich ein Fälschungsversuch durchgeführt, in dem ein Stempel wie nach Figur 4 auf den Deckel (21) des Behälters (20) aufgesetzt, dann stösst der Randbereich (17) des Stempels (13) durch den Deckel hindurch, weil der Aussendurchmesser des Deckels (21) wesentlich grösser ist als der im Deckel eingebaute Indikator (22). Es gelingt also nicht mehr ein erneutes Einfrieren des Indikators (22) auch wenn ein Stempel gemäss den Figuren 2 und 4 verwendet wird.

## Patentansprüche

1. Schmelzindikator zur Überwachung von temperaturempfindlichen Produkten, die in Kühlgeräten aufbewahrt werden, bestehend aus einem zumindest teilweise transparenten Behälter, der ganz oder teilweise mit einer Indikatorflüssigkeit gefüllt ist, deren Schmelzpunkt der zu überwachenden kritischen Temperatur entspricht, wobei die Indikatorflüssigkeit, ausgehend von einem festen gefrorenen Zustand in einen flüssigen Zustand bei Erreichen der kritischen Temperatur übergeht**, dadurch gekennzeichnet**, daß die Indikatorflüssigkeit (15) eine Temperaturdifferenz zwischen ihrem Schmelzpunkt und ihrem Gefrierpunkt besitzt und ihr Gefrierpunkt soweit unterhalb des Schmelzpunktes gewählt ist, daß der Übergang in den fest gefrorenen Zustand erst unterhalb der niedrigsten Temperatur des Kühlgerätes auftritt, wobei die Wandung des Indikatorbehälters (14) zumindest teilweise durch Druckeinwirkung von außen elastisch verformbar ist.

2. Schmelzindikator nach Anspruch 1, **dadurch gekennzeichnet**, daß der Behälter bei einem inneren Überdruck elastisch nachgebende Wandungen aufweist.

3. Schmelzindikator nach Anspruch 1, **dadurch gekennzeichnet**, daß der Behälter Kapillarzonen geringen Querschnitts besitzt, in welche die Indikatorflüssigkeit durch Kapillarwirkung einströmt.

4. Schmelzindikator nach einem oder mehreren der vorstehenden Ansprüche, **dadurch gekennzeichnet**, daß der Behälter die Form einer flachen Linse, mit Kapillarzonen am Rande, besitzt.

5. Schmelzindikator nach Anspruch 4, **dadurch gekennzeichnet**, daß im mittleren Bereich der Linsen nach innen gewölbte, elastisch nachgebende Wandungen vorhanden sind.

6. Schmelzindikator nach einem oder mehreren der vorstehenden Ansprüche, **dadurch gekennzeichnet**, daß in einem Indikator mehrere Behälter mit Indikatorflüssigkeit mit unterschiedlichen Schmelztemperaturen vorhanden sind.

7. Schmelzindikator nach Anspruch 6, **dadurch gekennzeichnet**, daß die Indikatorflüssigkeiten verschieden gefärbt sind.

8. Schmelzindikator nach einem oder mehreren der vorstehenden Ansprüche, **dadurch gekennzeichnet**, daß der Behälter als Blister ausgebildet und ein Teil der Verpackung ist.

## Claims

1. Melt indicator for monitoring temperature-sensitive products which are kept in refrigerators, consisting of an at least partially transparent container which is completely or partially filled with an indicator liquid of which the melting point corresponds to the critical temperature to be monitored, wherein the indicator liquid, starting from a solid frozen state, changes to a liquid state on reaching the critical temperature, characterised in that the indicator liquid (15) has a temperature difference between its melting point and its freezing point and its freezing point is selected so far below the melting point that the change to the solid frozen state occurs only below the lowest temperature of the refrigerator, wherein the wall of the indicator container (14) is at least partially elastically deformable by the action of pressure from the outside.

2. Melt indicator according to claim 1, characterised in that the container comprises walls which yield elastically in case of excess internal pressure.

3. Melt indicator according to claim 1, characterised in that the container has capillary zones of small cross-section into which the indicator liquid flows by capillary action.

4. Melt indicator according to one or more of the preceding claims, characterised in that the container has the shape of a flat lens, with capillary zones at the edge.

5. Melt indicator according to claim 4, characterised in that in the central region of the lenses there are inwardly curved, elastically yielding walls.

6. Melt indicator according to one or more of the preceding claims, characterised in that in one indicator there are several containers with indicator liquid with different melting temperatures.

7. Melt indicator according to claim 6, characterised in that the indicator liquids are differently coloured.

8. Melt indicator according to one or more of the preceding claims, characterised in that the container is constructed as a blister and forms part of the package.

## Revendications

1. Indicateur fusible pour la surveillance de produits sensibles à la température conservés dans des appareils réfrigérants, formé d'un récipient au moins partiellement transparent qui est complètement ou partiellement rempli d'un liquide indicateur dont le point de fusion correspond à la température critique à surveiller, le liquide indicateur passant, lorsque la température critique est atteinte, d'un état congelé à un état liquide, caractérisé en ce que le liquide indicateur (15) présente une différence de température entre son point de fusion et son point de congélation, et le point de congélation choisi est inférieur au point de fusion de telle sorte que le passage à l'état congelé ne se fasse qu'au-dessous de la température la plus basse de l'appareil réfrigérant, étant précisé que la paroi du récipient de l'indicateur (14) est au moins en partie élastiquement déformable de l'extérieur sous l'action d'une pression.

2. Indicateur fusible selon la revendication 1, caractérisé en ce que le récipient comporte des parois cédant élastiquement en présence d'une surpression interne.

3. Indicateur fusible selon la revendication 1, caractérisé en ce que le récipient présente des zones capillaires de faible section transversale dans lesquelles le liquide indicateur s'écoule par capillarité.

4. Indicateur fusible selon l'une au moins des revendications précédentes, caractérisé en ce que le récipient présente la forme d'une lentille plate pourvue, au bord, de zones capillaires.

5. Indicateur fusible selon la revendication 4, caractérisé en ce qu'il est prévu, dans la zone centrale des lentilles, des parois bombées vers l'intérieur cédant élastiquement.

6. Indicateur fusible selon l'une au moins des revendications précédentes, caractérisé en ce qu'il est prévu, dans un indicateur, plusieurs récipients contenant des liquides indicateurs de températures de fusion différentes.

7. Indicateur fusible selon la revendication 6, caractérisé en ce que les liquides indicateurs ont des couleurs différentes.

8. Indicateur fusible selon l'une au moins des revendications précédentes, caractérisé en ce que le récipient est conçu comme un blister et forme une partie de l'emballage.
